Europäisches Patentamt

(19) European Patent Office

Office européen des brevets

(11) Veröffentlichungsnummer : **0 033 883**
**B1**

(12) **EUROPÄISCHE PATENTSCHRIFT**

(45) Veröffentlichungstag der Patentschrift :
**05.10.83**

(21) Anmeldenummer : **81100536.2**

(22) Anmeldetag : **26.01.81**

(51) Int. Cl.³ : **C 08 G 65/20**, C 08 G 65/32//
**C08F283/06**

(54) Verfahren zur Herstellung von Polytetrahydrofuranen mit Acrylat- oder Methacrylatendgruppen.

(30) Priorität : 06.02.80 DE 3004328

(43) Veröffentlichungstag der Anmeldung :
19.08.81 Patentblatt 81/33

(45) Bekanntmachung des Hinweises auf die Patenterteilung : 05.10.83 Patentblatt 83/40

(84) Benannte Vertragsstaaten :
DE FR GB IT NL

(56) Entgegenhaltungen :
CH A 533 654
DE A 2 709 280
DE A 2 827 510

Chemical Abstracts Band 80, 14. Januar 1980
Columbus, Ohio, USA L.N. TUROVSKAYA et al.
« Copolymerization of tetrahydrofuran with propylene oxide in the presence of methacrylic anhydride » Seite 8, linke spalte, Abstract Nr. 3882b

Die Akte enthält technische Angaben, die nach dem Eingang der Anmeldung eingereicht wurden und die nicht in dieser Patentschrift enthalten sind.

(73) Patentinhaber : BAYER AG
Zentralbereich Patente, Marken und Lizenzen
D-5090 Leverkusen 1, Bayerwerk (DE)

(72) Erfinder : Heitz, Walter, Prof. Dr.
Am Schmidtborn 5
D-3575 Kirchhain 1 (DE)
Erfinder : Kress, Hans-Jürgen, Dipl.-Ing.
Hermann-Löns-Strasse 13
D-6300 Giessen (DE)
Erfinder : Stix, Wolfgang, Dr.
Breslauerstrasse 31
D-4150 Krefeld 11 (DE)

## Verfahren zur Herstellung von Polytetrahydrofuranen mit Acrylat- oder Methacrylatendgruppen

Gegenstand der Erfindung ist ein Verfahren zur Herstellung von Polytetrahydrofuranen mit Acrylat- oder Methacrylatendgruppen, das dadurch gekennzeichnet ist, daß man Tetrahydrofuran, gegebenenfalls in einem inerten organischen Lösungsmittel, mit Hilfe von 0,001 bis 5,0 Gew.-%, bevorzugt 0,05 bis 5,0 Gew.-%, bezogen auf Tetrahydrofuran, eines Katalysators und zusammen mit 0,1 bis 200 Gew.-%, bezogen auf Tetrahydrofuran, Acrylsäure- und/oder Methacrylsäureanhydrid bei Temperaturen von − 10 bis + 70 °C polymerisiert.

Es ist bekannt, Tetrahydrofuran in Gegenwart von Carbonsäureanhydriden zu polymerisieren (DE-A 2 709 280 und C. A. 3882 b, Vol. 80, 1974). Beispielsweise gelingt diese Umsetzung mit Essigsäureanhydrid. Es bilden sich dabei Polytetrahydrofurane mit Acetatendgruppen. Die bei der Polymerisation von Tetrahydrofuran in Gegenwart von Säureanhydriden erforderliche Übertragungsreaktion wird in ihrem Ausmaß durch die Nukleophilie des Säureanhydrids gesteuert. Da der $pK_s$-Wert der (Meth)Acrylsäure wesentlich kleiner ist als der der Essigsäure, ist nicht zu erwarten, daß auch bei Verwendung von Acrylsäure- oder Methacrylsäureanhydrid eine ausreichende Übertragungsreaktion eintritt. Deshalb ist es erstaunlich, daß diese Reaktion gerade mit Acrylsäure- bzw. Methacrylsäureanhydrid zu besonders guten Ergebnissen führt. Das Säureanhydrid ist nämlich am Ende der Reaktion praktisch vollständig verbraucht. Mann kann durch Variieren der Konzentration an tetrahydrofuran, der Menge des Acrylsäure- bzw. Methacrylsäureanhydrids und durch die Wahl der Temperatur das Molekulargewicht der Polymerisate von ca. 200 bis etwa 10 000 g/mol einstellen. Die Produkte des erfindungsgemäßen Verfahrens haben eine Funktionalität an ungesättigten Estergruppen von nahe 2.

Für das Verfahren geeignete inerte organische Lösungsmittel sind beispielsweise Chlorkohlenwasserstoffe wie Methylenchlorid, Tetrachlorkohlenstoff oder Nitroverbindungen wie Nitromethan. Im allgemeinen sind die Lösungen des Tetrahydrofurans in diesen Lösungsmitteln mindestens 10 Gew.-%ig, die höchste einsetzbare Konzentration ist reines Tetrahydrofuran.

Geeignete Katalysatoren sind Perchlorsäure, $HSbF_6$.

Die Menge an Acrylsäureanhydrid bzw. Methacrylsäureanhydrid wird im allgemeinen so gewählt, daß das Molverhältnis von Tetrahydrofuran zu Säureanhydrid 1 000 : 1 bis 1,5 : 1, bevorzugt 100 : 1 bis 2 : 1 ist.

Das Polymerisationsverfahren kann durchgeführt werden, indem man Tetrahydrofuran und gegebenenfalls das Lösungsmittel vorlegt, Katalysator und (Meth)Acrylsäureanhydrid zugibt und auf Reaktionstemperatur bringt. Das Polymerisat kann dann nach Unterbrechen der Polymerisation durch Zugabe einer Base, z. B. Natriumcarbonat, und Entfernen des nichtumgesetzten Tetrahydrofurans variiert werden. Es empfiehlt sich, unter Ausschluß von Sauerstoff und Feuchtigkeit zu polymerisieren. Bei Abwesenheit von Sauerstoff und Feuchtigkeit sind die erhaltenen Polymere stabil. Je nach Molekulargewicht sind sie niederviskose Flüssigkeiten oder wachsartige Feststoffe. Sie können durch Zusatz bekannter Inhibitoren für die radikalische Polymerisation (Phenole, Phenothiazin) stabilisiert werden. Es ist von besonderem Vorteil, die Polymerisation in Gegenwart von Inhibitoren für die radikalische Polymerisation durchzuführen.

Durch Einwirkung von Licht oder Sauerstoff und/oder durch radikalbildende Initiatoren werden sie vernetzt und ergeben dann Produkte mit kautschukelastischen Eigenschaften. Die unvernetzten Polymerisate können auch mit Vinylmonomeren copolymerisiert werden. Sie bewirken dann selbst eine Vernetzung der Copolymerisate und damit eine Verbesserung von deren Schlagzähigkeit.

Beispiel 1

100 ml $CH_2Cl_2$ wurden in einen auf 5 °C gekülten Kolben gefüllt. 3 ml Acrylsäureanhydrid wurden unter Stickstoffgegenstrom zugegeben. Zur Initiierung wurden ca. 1 ml $HSbF_6$ (spektroskopisch rein) zugepritzt. Die Lösung wurde 15 Minuten bei 5 °C gerührt und dann wurden 110 ml THF zugegeben. Nach 3 Tagen Polymerisationdauer (T = 10 °C) wurde der Ansatz mit gesättigter Sodalösung abgebrochen, mit Wasser bis zur neutralen Reaktion gewaschen, und im Ölpumpenvakuum getrocknet.

Man erhielt ein sehr zähes Material, das nach 24 Stunden erstarrte.

Charakteristische Werte : $M_n = 1\,408$ g/Mol, Esterfunktionalität $f = 1,81$, $P_n = 18,0$.

Die Substanz wurde durch IR-, NMR-Spektren und durch ein Gelpermeationschromatogramm charakterisiert.

Beispiel 2

100 ml $CH_2Cl_2$ wurden in einen auf 5 °C gekühlten Kolben gefüllt, 110 ml THF zugegeben, und unter Stickstoffgegenstrom 0,9 ml $HSbF_6$ zugespritzt. Nach 24 Stunden wurden 3 ml Acrylsäureanhydrid zugegeben. Nach weiteren 2 Tagen Reaktionsdauer (T = 10 °C) wurde der Ansatz mit 100 ml gesättigter Sodalösung abgebrochen, mit 200 ml $CH_2Cl_2$ verdünnt, mit Wasser bis zur neutralen Reaktion gewaschen, und im Ölpumpenvakuum getrocknet.

Man erhält ein zähes Material, das nach 24 Stunden erstarrte.

Charakteristische Werte : $M_n = 1\,337$ g/mol, Esterfunktionalität $f = 1,76$, $p_n = 17,3$.

Die Substanz wurde durch ein IR-Spektrum und durch ein Gelpermeationschromatogramm charakterisiert.

Beispiel 3

In einen auf 5 °C gekühlten Kolben wurden 100 ml $CH_2Cl_2$, 5 ml Methacrylsäureanhydrid und 1,05 ml $HSbF_6$ gegeben ; nach 15 Minuten wurden 110 ml THF hinzugefügt.

Nach 2 Tagen Polymerisationsdauer wurde der Ansatz mit 100 ml gesättigter Sodalösung abgebrochen, mit 200 ml $CH_2Cl_2$ verdünnt, bis zur neutralen Reaktion mit Wasser gewaschen, und im Ölpumpenvakuum getrocknet.

Das Molekulargewicht des Produktes ergibt sich zu 1 843 g/Mol.

Das Produkt wurde durch ein IR- und ein NMR-Spektrum, sowie durch ein Gelpermeationschromatogramm als ein Oligo-THF mit Methacrylatendgruppen identifiziert.

Beispiel 4

Zu 195 ml THF wurden 3,5 ml Acrylsäureanhydrid und 117,4 mg 2,6-Di-tert.-butyl-4-methylphenol als Stabilisator, sowie nach Abkühlung auf 5 °C 0,2 ml $HSbF_6$ zugegeben. Die Reaktionstemperatur wurde auf 40 °C eingestellt. Nach vier Tagen Reaktionsdauer wurden 0,5 ml Di-butyl-amin als Abbruchmittel zugegeben.

Nach weiteren 2 Stunden Rühren wurde die Substanzlösung auf einen basischen Ionenaustauscher gegeben, um die vorhandenen $SbF_6^-$-Ionen zu entfernen. Anschließend wurde im Wasserstrahlvakuum das restliche Monomere abgezogen und die Substanz im Ölpumpenvakuum getrocknet.

Die Ausbeute an Polytetrahydrofuran mit Acrylatendgruppen beträgt 107 g. Das produkt besitzt ein Molekulargewicht von 2 797 g/mol ; eine Esterfunktionalität von 1,9 und ein Zahlenmittel des Polymerisationsgrades von 37,4.

Beispiel 5

Zu 190 ml THF wurden 3 ml Acrylsäureanhydrid und nach Abkühlung auf 5 °C 0,15-0,2 ml $HSbF_6$ zugegeben. Die Reaktionstemperatur wurde auf 40 °C eingestellt.

Nach 4 Tagen Reaktionsdauer wurden 0,5 ml Di-butyl-amin als Abbruchmittel und 114 mg 2,6-Di-tert.-butyl-4-methylphenol als Stabilisator zugefügt.

Nach weiteren 2 Stunden Rühren wurde die Substanzlösung auf einen basischen Ionenaustauscher gegeben, um die vorhandenen $SbF_6^-$-Ionen zu entfernen. Anschließend wurde im wasserstrahlvakuum das restliche Monomere abgezogen und die Substanz im Ölpumpenvakuum getrocknet.

Die Ausbeute an Polytetrahydrofuran mit Acrylatendgruppen beträgt 106 g. Das Produkt besitzt ein Molekulargewicht von 4 026 g/mol, eine Esterfunktionalität von 1,95-2,0 und ein Zahlenmittel des Polymerisationsgrades von 54,5.

**Ansprüche**

1. Verfahren zur Herstellung von Polytetrahydrofuranen mit Acrylat- und/oder Methacrylatendgruppen, dadurch gekennzeichnet, daß man Tetrahydrofuran, gegebenenfalls in einem inerten organischen Lösungsmittel, mit Hilfe von 0,001 bis 5,0 Gew.-%, bevorzugt von 0,05 bis 5,0 Gew.-%, bezogen auf Tetrahydrofuran, Perchlorsäure oder $HSbF_6$ als Katalysator und zusammen mit 0,1 bis 200 Gew.-%, bezogen auf Tetrahydrofuran, Acrylsäure- und/oder Methacrylsäureanhydrid bei Temperaturen von $- 10$ bis $+ 70$ °C polymerisiert.

2. Polytetrahydrofurane mit Acrylat- und/oder Methacrylatendgruppen, erhalten nach Anspruch 1, und einem Molekulargewicht von 200 bis 10 000.

**Claims**

1. Process for the production of polytetrahydrofurans containing terminal acrylate and/or methacrylate groups, characterised in that tetrahydrofuran, optionally in an inert organic solvent, is polymerised at temperatures of $- 10$ to $+ 70$ °C with the aid of 0.001 to 5.0 % by weight, preferably 0.05 to 5.0 % by weight, based on tetrahydrofuran, of perchloric acid or $HSbF_6$ as catalyst, and together with 0.1 to 200 % by weight, based on tetrahydrofuran, of acrylic acid anhydride and/or methacrylic acid anhydride.

2. Polytetrahydrofurans containing terminal acrylate and/or methacrylate groups, obtained according to Claim 1, and having a molecular weight of 200 to 10,000.

**Revendications**

1. Procédé pour la fabrication de polytétrahydrofurannes à groupes terminaux acrylate et/ou méthacrylate, caractérisé en ce que l'on polymérise le tétrahydrofuranne, éventuellement dans un solvant organique inerte, au moyen de 0,001 à 5,0 % en poids, de préférence 0,05 à 5,0 % en poids, d'acide perchlorique ou de $HSbF_6$ comme catalyseur, par rapport au tétrahydrofuranne et simultanément avec 0,1 à 200 % en poids d'anhydride acrylique et/ou d'anhydride méthacrylique, par rapport au tétrahydrofuranne, à des températures de $- 10$ à $+ 70$ °C.

2. Polytétrafurannes à groupes terminaux acrylate et/ou méthacrylate, obtenus selon la revendication 1, et d'un poids moléculaire de 200 à 10 000.